# EUROPÄISCHE PATENTSCHRIFT

(11) **EP 0 768 276 B1**
(45) Veröffentlichungstag und Bekanntmachung des Hinweises auf die Patenterteilung: **13.12.2000**
(21) Anmeldenummer: 96113509.2
(22) Anmeldetag: 23.08.1996
(51) Int. Cl.: C01B 33/38

(54) **Verfahren zur Herstellung von hochaustauschfähigem Natriumsdisilikat**
Process for the preparation of sodium disilicate with high ion exchange efficiency
Procédé de préparation de disilicate de sodium ayant une capacité élevée d'échange d'ion

(30) Priorität: 12.10.1995 DE 19537957
(43) Veröffentlichungstag der Anmeldung: 16.04.1997
(73) Patentinhaber: Clariant GmbH, 65929 Frankfurt am Main (DE)
(72) Erfinder: Wilkens, Jan, Dr., 50354 Hürth (DE); Schimmel, Günther, Dr., 50374 Erftstadt (DE); Tapper, Alexander, Dr., 41239 Mönchengladbach (DE)

(56) Entgegenhaltungen:
- EP-A- 0 164 552
- EP-A- 0 425 428
- DE-A- 4 330 868
- FR-A- 2 227 224
- DATABASE WPI Section Ch, Week 9241 Derwent Publications Ltd., London, GB; Class D25, AN 92-335303 XP002021964 & JP-A-04 238 809 (NIPPON CHEM IND CO LTD) , 26.August 1992

## Beschreibung

Die Erfindung betrifft ein Verfahren zur Herstellung von hochaustauschfähigem Natriumdisilikat in der β-Form mit einem Molverhältnis Na₂0 : Si0₂ von etwa 1 : 2 aus einer Silikatquelle und Natronlauge bei erhöhter Temperatur und Filtrieren und Abtrennen des entstandenen Produkts, ein nach diesem Verfahren hergestellten Produkt und seine Verwendung.

Zahlreiche Verfahren zur Herstellung von kristallinen Natriumsilikaten und Natriumdisilikaten sind in der Literatur beschrieben worden. Je nach Art und Zusammensetzung der Ausgangsstoffe und den verschiedenen, in der Literatur beschriebenen Verfahrensschritten werden kristalline Silikate der verschiedensten Art und Zusammensetzung erhalten.

So beschreibt die DE-OS 34 17 649 ein Verfahren, bei dem hydratisierte Natriumsilikate mit Kristallkeimen versetzt werden, die Reaktionsmischung erhitzt und entwässert und die entwässerte Reaktionsmischung solange bei einer Temperatur gehalten wird, die mindestens 450 °C beträgt, jedoch unter dem Schmelzpunkt liegt, bei dem sich das kristalline Natriumsilikat mit Schichtstruktur bildet. Unterhalb dieses Temperaturbereiches werden lediglich amorphe, zum Teil nicht definierbare Produkte erhalten.

Die EP-A-0 320 770 beschreibt ein Verfahren zur Herstellung eines Natriumsilikates mit Schichtstruktur, bei dem röntgenkristallines Schichtsilikat in Wasser aufgelöst und anschließend bei erhöhter Temperatur eingedampft wird. Bei diesem Verfahren geht man bereits von einem kristallinen Natriumschichtsilikat aus und erhält durch die vorgenannte Behandlung ein anders aufgebautes Natriumschichtsilikat.

Weiterhin beschreibt die DE-OS 31 00 942 ein Verfahren zur Herstellung kristalliner Natriumsilikate mit einem Si0₂ : Na₂0-Verhältnis von 2 : 1 bis 3 : 1 durch Erhitzen von Natriumsilikatgläsern oder von Natriumcarbonat und Quarz.

Hydratisierte, kristalline Natriumsilikate mit Kanemit-Struktur werden erhalten, indem in einem ersten Schritt Kieselsäure in Methanol dispergiert und dann mit kalter Natronlauge versetzt wird. Wegen der kontrollierten Zugabe der einzelnen Substanzen ist dieses Verfahren sehr aufwendig, zudem erfordert es wegen der Verwendung an brennbarem Methanol spezielle Sicherheitsvorkehrungen (Beneke und Lagaly, Am. Mineral. 62, (1977) 763-771).

Willgallis und Range (Glastechnische Berichte, 37 (1964) 194-200) beschreiben die Herstellung von α-, β- und γ-Na₂Si₂0₅ durch Temperung von geschmolzenem und nicht geschmolzenem, entwässertem Natronwasserglas. Die hierbei entstehenden Produkte haben Schichtstruktur, ihre Kristallinität ergibt sich aus den Röntgendiffraktogrammen. Dabei wurde gezeigt, daß in Abhängigkeit von der herrschenden Temperatur verschiedene Kristall-Modifikationen erhalten werden können.

Morey (Z. anorg. allg. Chem., 86 (1914) 305-321.), Franke (Bull. Soc. Chim., 17 (1950) 454-458.) sowie Hubert, Guth und Wey (Comptes rendus, 278 Série D (1974) 1453-1455.) beschreiben die Herstellung von β-Na₂Si₂0₅ entweder durch hydrothermale Kristallisation von amorphen Natriumdisilikat-Gläsern oder durch hydrothermale Umsetzung und Kristallisation einer Silikatquelle (z.B. amorphes oder kristallines SiO₂) mit Natronlauge. Die Reaktionstemperaturen können dabei zwischen 250° und 300 °C, die Reaktionszeiten im Bereich von Stunden bis zu einigen Tagen liegen. Die Gesamtfeststoffkonzentrationen sollten typischerweise einer übersättigten Lösung entsprechen, wenigstens aber 40 % betragen.

Letztendlich beschreibt die EP-B-0 502 913 ein Verfahren zur Herstellung kristallinem, hochreinem β-Natriumdisilikat, indem man von Quarzsand und Natriumhydroxidlösung und/oder wäßrigen Lösungen von amorphem Natriumdisilikat ausgeht. Hierfür sind begrenzte Konzentrations- und Temperaturbedingungen notwendig. Dabei wird eine hochkonzentrierte Lösung der Ausgangsprodukte (Silikatquelle und Natronlauge) mit einer Gesamtfeststoffkonzentration von 50 bis 75 Gew.-% in einem ersten Schritt auf mindestens 235°C erhitzt, in einem zweiten Schritt kann gegebenenfalls eine Aufkonzentrierung des Gesamtfeststoffgehaltes durch Entfernung von Wasser aus dem Reaktionsgemisch erfolgen, wobei in Abhängigkeit der Durchführung des zweiten Schrittes in einem dritten Schritt die im zweiten Schritt entfernte Wassermenge ganz oder teilweise während oder unmittelbar nach der sich anschließenden Abkühlung auf 90 bis 130 °C wieder zugegeben wird und anschließend das anfallende, kristalline Natriumdisilikat abgetrennt wird. Für dieses Verfahren sind hohe Konzentrationen an Gesamtfeststoffen in der Reaktionslösung (oberhalb 50 Gew.-%) notwendig.

Die gemäß dem vorgenannten Stand der Technik beschriebenen (Schicht)Silikate werden vielfach noch kompaktiert. So beschreibt die EP-0 425 428 B1 ein Verfahren zur Herstellung von kristallinen Natriumsilikaten mit Schichtstruktur, in dem amorphes Natriumsilikat mit einem Wassergehalt von 15 bis 23 Gew.-% in einem Drehrohrofen bei Temperaturen von 500 bis 850 °C calziniert wird, das Calzinat nach Brechen und Mahlen einem Walzenkompaktierer zugeführt und dann die erhaltenen Schulpen nach Vorzerkleinern und Absieben zu einem Granulat mit einem Schüttgewicht von 700 bis 1000 g/l verarbeitet werden.

Die DE-A-43 30 868 beschreibt ein Verfahren zur Herstellung von verdichteten, körnigen Natriumsilikaten, bei dem man das Natriumsilikat mit einem mittleren Korndurchmesser von < 500 µm zunächst mit einem seine Härte erhöhenden Material vermischt, bevor man es durch Kompaktieren, Zerkleinern und Absieben in ein Preßgranulat mit Korngrößen von 0,1 bis 5 mm überführt.

Die nach den vorgenannten Verfahren hergestellten Natriumsilikate sind jedoch entweder keine der β-Form oder aber, wenn mit den beschriebenen Verfahren solche hergestellt werden können, fehlt es diesen häufig an einer ausreichenden Kristallinität. Auch ist es oft nicht möglich, bei einer Umsetzung in den technischen Maßstab homogene Endprodukte zu erhalten. Für den Einsatz der Disilikate in Wasch- und Reinigungsmittel ist das Kalkbindevermögen (KBV), das oftmals mit der Kristallinität der Proben korreliert ist, eine wichtige Kenngröße. Um eine möglichst einwandfreie Funktion des Tensidsystems und damit eine hohe Primärwaschwirkung zu gewährleisten, ist eine möglichst schnelle und vollständige Entfernung der Härtebildner in der Waschflotte notwendig.

Es war daher Aufgabe der Erfindung, die vorgenannten Nachteile zu beseitigen, und ein Verfahren zur Verfügung zu stellen, bei dem auf einfache Art und Weise hochaustauschfähige β-Natriumdisilikate mit erhöhter Kristallinität und erhöhten KBV-Werten erhalten werden können. Zusätzlich sollte das Kalkbindevermögen dieser Substanzen nach möglichst kurzer Zeit zur Verfügung stehen.

Diese Aufgabe wird gelöst durch ein Verfahren zur Herstellung von hochaustauschfähigem Natriumdisilikat in der β-Form mit einem Molverhältnis Na₂0 : Si0₂ von etwa 1 : 2 aus einer Silikatquelle und Natronlauge ohne Zusatz von Kristallkeimen bei einer Temperatur von 235 bis 300°C und Filtrieren und Abtrennen des entstandenen Produkts, welches dadurch gekennzeichnet ist, daß das Produkt bei einer Temperatur von 450 bis 780 °C nachgetempert und/oder zu kompakten Teilen verpreßt wird.

Unter der Temperatur ist der Bereich von 235 bis 300 °C (hydrothermale Reaktionsbedingungen) zu verstehen.

Das so erhaltene Produkt weist eine erhöhte Kristallinität und damit einen höheren Kalkbindewert auf.

Nach dem erfindungsgemäßen Verfahren kann das Produkt entweder nachgetempert oder verpreßt werden bzw. es wird zuerst nachgetempert und dann verpreßt.

Bevorzugt wird das Produkt bei einer Temperatur von 600 bis 720°C nachgetempert.

Ebenfalls bevorzugt wird das Produkt 0,25 bis 5 Stunden nachgetempert.

Gemäß der Erfindung ist es auch möglich, das nachgetemperte Produkt zu kompakten Teilen zu verpressen.

Bevorzugt wird mittels eines Walzenkompaktors zu kompakten Teilen verpreßt und die kompakten Teile durch mechanisches Zerkleinern zu einem Granulat verarbeitet. Beispielsweise kann auf Partikelgrößen von 0,2 bis 2 mm aufgemahlen oder gebrochen werden.

Ihre bevorzugte Verwendung finden die erfindungsgemäßen Natriumdisilikate in Wasch- und Reinigungsmitteln.

Die Erfindung betrifft ebenfalls ein hochaustauschfähiges Natriumdisilikat der β-Form mit einem Molverhältnis von Na₂0 : Si0₂ von etwa 1 : 2, das nach dem erfindungsgemäßen Verfahren hergestellt wurde.

In den folgenden Beispielen, in denen die Erfindung näher beschrieben wird, wurde das Kalkbindevermögen der erhaltenen kristallinen Natriumdisilikate wie folgt ermittelt:

### Methode 1

30 g einer Calciumlösung (131,17 g CaCl₂^{.}2H₂0 werden in destilliertes Wasser gelöst und auf 5000 g aufgefüllt) werden mit 5,6 g einer Pufferlösung (75,07 g Glycin und 58,4 g NaCl werden in destilliertes Wasser gelöst und auf 1000 ml aufgefüllt) gemischt und mit destilliertem Wasser auf 999 g aufgefüllt. Diese Lösung, die einer Wasserhärte von 30°dH bzw. 300 mg Ca0/l entspricht, wird auf 20°C temperiert und mit 1 g Probe versetzt. Die Lösung wurde für eine bestimmte Zeit (z.B. 10 Minuten) gerührt, abfiltriert und im Filtrat das in der Lösung verbliebene Calcium komplexometrisch bestimmt. Durch Differenzbildung mit dem ursprünglichen Calcium-Gehalt wurde das Calcium-Bindevermögen, allgemein als KBV-Wert bezeichnet, bestimmt.

### Methode 2

Die Calcium-Stammlösung besteht aus 157,30 g CaCl₂^{.}2H₂0, das in destilliertem Wasser gelöst und auf 1000 ml aufgefüllt wird. Zur Herstellung der Pufferlösung werden 88,5 g Glycin und 69,04 g NaCl in 520 ml 1 n Natronlauge gelöst und mit destilliertem Wasser auf 2000 ml aufgefüllt.
980 ml destilliertes Wasser, 20 ml Pufferlösung und insgesamt 5 ml Calcium-Stammlösung werden gemischt und auf 20°C temperiert. Die resultierende Wasserhärte entspricht ebenfalls 30°dH. Nach Zugabe von 1 g Probensubstanz wird die ungebundene Calciumkonzentration mit Hilfe einer ionensensitiven Elektrode (z.B. Fa. ORION, Modell 900 200) fortlaufend detektiert. Als Maß für die Schnelligkeit der Wasserenthärtung wird in den folgenden Beispielen der KBV-Wert nach 1 und nach 3 Minuten aufgeführt.

### Beispiel 1 (Vergleichsbeispiel)

Eine handelsübliche Natronwasserglas-Lösung (Henkel 58/60) wurde durch Zugabe von Natronlauge auf ein Nₐ₂0 : Si0₂-Verhältnis von 1 : 2 eingestellt und durch Eindampfen aufkonzentriert. Der resultierende Feststoffgehalt der Lösung betrug 62,8 %. 1225 g dieser Wasserglas-Lösung wurden in einem 1 1-Rührautoklav - bestehend aus V4A-Stahl - eingefüllt und anschließend unter autogenem Wasserdampfdruck innerhalb von 2 1/2 h auf 280°C aufgeheizt. Nach Ablauf einer Kristallisationsdauer von 5 h wurde der Druckbehälter innerhalb einer Stunde auf 80 °C abgekühlt und die wäßrige Suspension über ein 5 µm-Druckfilter filtriert. Der zurückbehaltene Feststoff wurde mehrmals mit destilliertem Wasser gewaschen und bei 110 °C getrocknet.

Das Röntgenbeugungdiffraktogramm des hydrothermal kristallisierten Zwischenproduktes läßt sich vollständig mit den literaturbekannten Daten der β-Modifikation des Na₂Si₂0₅ (Tieftemperatur-Modifikation) indizieren. Als Maß für die Kristallinität der Probe wird die absolute Intensität des Röntgenreflexes mit dem Netzebenenabstand von 2,971 Å gemessen; es wurde ein Wert von I_{2,971Å} = 3192 cts ermittelt.

Das Kalkbindevermögen der Probe wurde gemäß Methode 1 zu 78 mg Ca/g bestimmt. Gemäß Methode 2 läßt sich ein KBV-Wert von 48 mg Ca/g nach 1 Minute bzw. 66 mg Ca/g nach 3 Minuten ermitteln.

### Beispiel 2

Jeweils ein Teil des Zwischenproduktes aus Beispiel 1 wurde eine Stunde lang bei verschiedenen Temperaturen nachgetempert. In Tabelle 1 sind die aus dem Röntgenbeugungsdiffraktogrammen ermittelten Intensitäten aufgeführt.

Für die bei 700 °C nachgetemperte Probe, die aufgrund der Nachbehandlung eine deutlich erhöhte Kristallinität aufweist, wurde das Kalkbindevermögen gemäß Methode 1 zu 92 mg Ca/g bestimmt. Gemäß Methode 2 läßt sich ein KBV-Wert von 64 mg Ca/g nach 1 Minute bzw. 82 mg Ca/g nach 3 Minuten ermitteln.

Für die bei 720 °C nachgetemperte Probe wurde das Kalkbindevermögen gemäß Methode 1 zu 101 mg Ca/g bestimmt. Gemäß Methode 2 läßt sich ein KBV-Wert von 65 mg Ca/g nach 1 Minute bzw. 84 mg Ca/g nach 3 Minuten ermitteln.

### Beispiel 3 (Vergleichsbeispiel)

Die Herstellung des hydrothermal kristallisierten β-Na₂Si₂0₅ wurde gemäß Beispiel 1 mit Hilfe einer aufkonzentrierten Wasserglas-Lösung (Feststoffgehalt 62,6 %; Verhältnis Na₂0 : Si0₂= 1 : 2) durchgeführt. Die Kristallisationsdauer bei 280 °C betrug 2 h.

Das Röntgenbeugungsdiffraktogramm des ungetemperten Zwischenproduktes läßt sich vollständig mit den literaturbekannten Daten der β-Form des Na₂Si₂0₅ indizieren. Als Maß für die Kristallinität der Probe wurde eine absolute Intensität von I_{2,971Å} = 4095 cts ermittelt.

Das Kalkbindevermögen der Probe wurde gemäß Methode 1 zu 90 mg Ca/g bestimmt. Gemäß Methode 2 läßt sich ein KBV-Wert von 54 mg Ca/g nach 1 Minute bzw. 72 mg Ca/g nach 3 Minuten ermitteln.

### Beispiel 4

Um den Kompaktiervorgang unter Laborbedingungen nachzustellen, wurde ein Teil der Probe aus Beispiel 3 in einer Tablettenpresse (Preßdruck ca. 5 kbar) verpreßt und anschließend in einem Achatmörser grob zerkleinert.

Das Kalkbindevermögen der derart aufbereiteten Probe wurde gemäß Methode 1 zu 92 mg Ca/g bestimmt. Gemäß Methode 2 läßt sich ein KBV-Wert von 60 mg Ca/g nach 1 Minute bzw. 92 mg Ca/g nach 3 Minuten ermitteln.

### Beispiel 5

Ein Teil der Probe aus Beispiel 3 wurde 1 h lang bei 700 °C nachgetempert. Aus dem Röntgenbeugungsdiffraktogramm wurde eine absolute Intensität von I_{2,971Å} = 5402 cts ermittelt.

Das Kalkbindevermögen des nachgetemperten Produktes wurde gemäß Methode 1 zu 105 mg Ca/g bestimmt. Gemäß Methode 2 läßt sich ein KBV-Wert von 58 mg Ca/g nach 1 Minute bzw. 75 mg Ca/g nach 3 Minuten ermitteln.

### Beispiel 6

Ein Teil der Probe aus Beispiel 5 wurde in einer Tablettenpresse (Preßdruck ca. 5 kbar) verpreßt und anschließend in einem Achatmörser grob zerkleinert.

Das Kalkbindevermögen der derart aufbereiteten Probe wurde gemäß Methode 1 zu 109 mg Ca/g bestimmt. Gemäß Methode 2 läßt sich ein KBV-Wert von 84 mg Ca/g nach 1 Minute bzw. 118 mg Ca/g nach 3 Minuten ermitteln.

### Beispiel 7

Um das erfindungsgemäße Verfahren in einem exemplarischen, technischen Kompaktierversuch zu testen, wurden in einem 5 1-Rührautoklaven mehrere Ansätze zur Hydrothermalkristallisation von β-Na₂Si₂0₅ gemäß Beispiel 1 durchgeführt und die erhaltenen Pulver vereinigt.

Das Röntgenbeugungsdiffraktogramm des Zwischenproduktes läßt sich vollständig mit den literaturbekannten Daten der β-Modifikation des Na₂Si₂0₅ indizieren. Als Maß für die Kristallinität der Probe wurde eine absolute Intensität von I_{2,971Å} = 3680 cts ermittelt.

Das Kalkbindevermögen des Zwischenproduktes wurde gemäß Methode 1 zu 84 mg Ca/g bestimmt. Gemäß Methode 2 läßt sich ein KBV-Wert von 54 mg Ca/g nach 1 Minute bzw. 74 mg Ca/g nach 3 Minuten ermitteln.

5 kg des so erhaltenen β-Na₂Si₂O₅ wurden auf einem Kompaktor (Fa. BEPEX GmbH) mit einem Walzendurchmesser von 200 mm bei einer Linienpreßkraft von 30 kN/cm verpreßt und anschließend zu einem Granulat aufgemahlen.

Das Kalkbindevermögen des Granulats wurde gemäß Methode 1 zu 88 mg Ca/g bestimmt. Gemäß Methode 2 läßt sich ein KBV-Wert von 72 mg Ca/g nach 1 Minute bzw. 86 mg Ca/g nach 3 Minuten ermitteln.

**TABELLE 1**

| Nachbehandlungstemperatur [°C] | 400 | 450 | 500 | 550 | 600 | 660 | 680 | 700 | 720 |
|---|---|---|---|---|---|---|---|---|---|
| I_{2,971Å} [cts] | 3315 | 3569 | 3624 | 3869 | 4122 | 4199 | 4231 | 4489 | 4761 |

## Patentansprüche

1. Verfahren zur Herstellung von hochaustauschfähigem Natriumsilikat in der β-Form mit einem Molverhältnis Na₂0 : Si0₂ von etwa 1 : 2 aus einer Silikatquelle und Natronlauge ohne Zusatz von Kristall keimen bei einer Temperatur von 235 bis 300 °C und Filtrieren und Abtrennen des entstandenen Produkts, dadurch gekennzeichnet, daß das Produkt bei einer Temperatur von 450 bis 780 °C nachgetempert und/oder zu kompakten Teilen verpreßt wird.

2. Verfahren nach Anspruch 1, dadurch gekennzeichnet, daß bei 600° bis 720°C nachgetempert wird.

3. Verfahren nach Anspruch 1 oder 2, dadurch gekennzeichnet, daß 0,25 bis 5 Stunden nachgetempert wird.

4. Verfahren nach mindestens einem der Ansprüche 1 bis 3, dadurch gekennzeichnet, daß das nachgetemperte Produkt zu kompakten Teilen verpreßt wird.

5. Verfahren nach mindestens einem der Ansprüche 1 bis 4, dadurch gekennzeichnet, daß mittels eines Walzenkompaktors zu kompakten Teilen verpreßt wird und die kompakten Teile durch mechanisches Zerkleinern zu einem Granulat verarbeitet werden.

6. Verwendung von hochaustauschfähigen Natriumdisilikaten, hergestellt nach mindestens einem der Ansprüche 1 bis 5, in Wasch- und Reinigungsmitteln.

7. Hochaustauschfähiges Schichtsilikat der β-Form mit einem Molverhältnis von Na₂0 : Si0₂ von etwa 1 : 2, hergestellt nach mindestens einem der Ansprüche 1 bis 5.

## Claims

1. A process for preparing sodium disilicate in the β form having a high ion-exchange capacity and a molar ratio Na₂O:SiO₂ of about 1:2 from a silicate source and sodium hydroxide solution, without addition of crystal nuclei, at from 235 to 300°C, with the product formed being separated off by filtration, wherein the product is further heat treated at from 450 to 780°C and/or is pressed to form compact parts.

2. The process as claimed in claim 1, wherein the further heat treatment is carried out at 600° to 720°C.

3. The process as claimed in claim 1 or 2, wherein the further heat treatment is carried out for 0.25 to 5 hours.

4. The process as claimed in at least one of claims 1 to 3, wherein the product which has been further heat treated is pressed to form compact parts.

5. The process as claimed in at least one of claims 1 to 4, wherein the product is pressed to form compact parts by means of a roller compactor and the compact parts are processed into a granular material by mechanical comminution.

6. The use of sodium disilicates having a high ion-exchange capacity and prepared as claimed in at least one of claims 1 to 5 in laundry detergents and cleaners.

7. A sheet silicate in the β form having a high ion-exchange capacity and a molar ratio Na₂O:SiO₂ of about 1:2, prepared as claimed in at least one of claims 1 to 5.

## Revendications

1. Procédé de préparation de silicate de sodium sous forme β, ayant un pouvoir d'échange élevé, un rapport molaire Na₂O:SiO₂ d'environ 1:2, à partir d'une source de silicate et de lessive de soude, sans ajout de germes de cristallisation, à une température de 235 à 300°C, et par filtration et séparation du produit obtenu, caractérisé en ce qu'on recuit le produit à une température de 450 à 780°C et/ou comprime pour obtenir des pièces compactes.

2. Procédé selon la revendication 1, caractérisé en ce qu'on réalise le recuit à une température de 600 à 720°C.

3. Procédé selon la revendication 1 ou 2, caractérisé en ce que la durée de recuit est de 0,25 à 5 heures.

4. Procédé selon au moins l'une des revendications 1 à 3, caractérisé en ce qu'on comprime le produit recuit pour obtenir des pièces compactes.

5. Procédé selon au moins l'une des revendications 1 à 4, caractérisé en ce qu'on comprime au moyen d'un dispositif de compactage à cylindres pour obtenir des pièces compactes et on transforme les pièces compactes par fragmentation mécanique en un granulé.

6. Utilisation de disilicates de sodium ayant un pouvoir d'échange élevé, préparés selon au moins l'une des revendications 1 à 5, dans des détergents et produits d'entretien.

7. Phyllosilicate de la forme β ayant un pouvoir d'échange élevé ayant un rapport molaire de Na₂O:SiO₂ d'environ 1:2, préparé selon au moins l'une des revendications 1 à 5.
